# FASCICULE DE BREVET EUROPEEN

(11) **EP 1 507 080 B1**
(45) Date de publication et mention de la délivrance du brevet: **22.03.2006**
(21) Numéro de dépôt: 04291938.1
(22) Date de dépôt: 29.07.2004
(51) Int. Cl.: F02K 1/82, F02K 1/12

(54) **Tuyère convergente divergente de turboréacteur**
Konvergente-divergente Schubdüse eines Strahltriebwerks
Convergent-divergent turboreactor nozzle

(30) Priorité: 12.08.2003 FR 0309854
(43) Date de publication de la demande: 16.02.2005
(73) Titulaire: SNECMA, 75015 Paris (FR)
(72) Inventeur: Prouteau, Jackie, 94440 Villecresnes (FR); Curtelin, Raphael, 77720 Saint-Mery (FR); Lapergue, Guy, 77950 Rubelles (FR); Feder, Didier, 77000 Melun (FR)
(74) Mandataire: Barbin le Bourhis, Joel

(56) Documents cités:
- US-A- 4 081 137
- US-A- 4 203 286
- US-A- 5 775 589

## Description

La présente invention concerne une tuyère convergente divergente de turboréacteur. De telles tuyères convergentes divergentes, dénommées ci-après tuyères CV-DV, équipent généralement des turboréacteurs d'avions supersoniques militaires.

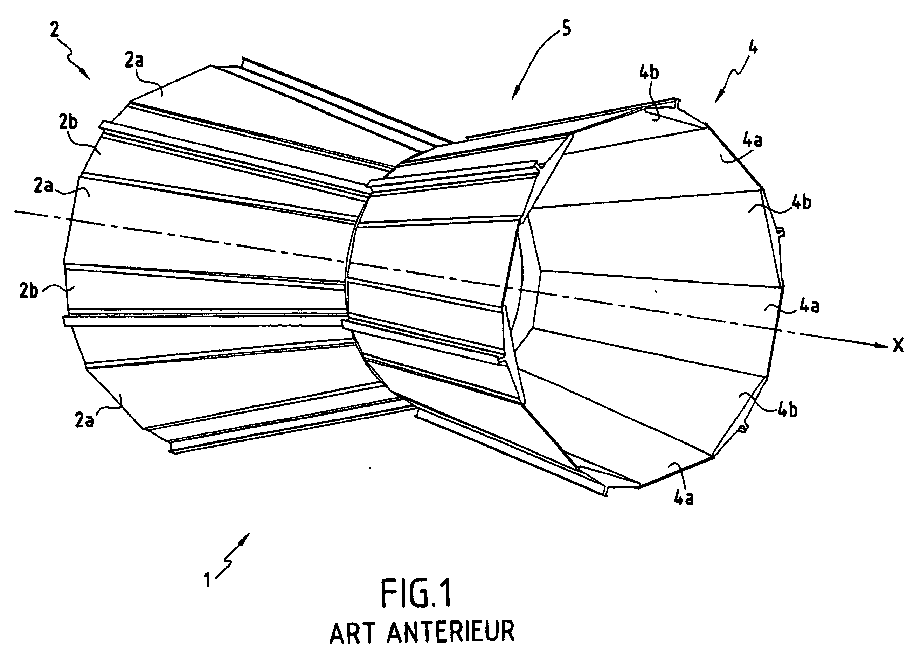

La figure 1 représente schématiquement une tuyère CV-DV 1 de type connu. Cette tuyère d'axe X comprend une première couronne de volets convergents 2 et une seconde couronne de volets divergents 4. Parmi les volets convergents 2 et divergents 4, on distingue les volets commandés 2a, 4a, des volets suiveurs 2b, 4b.

Les volets commandés 2a, 4a sont reliés à un mécanisme de commande 5 qui permet de les déplacer. Ce mécanisme de commande est généralement constitué de leviers, de biellettes, de chapes, ou d'un anneau, de galets et de cames. Le déplacement des volets commandés 2a, 4a permet de modifier l'ouverture de la tuyère 1 en fonction des conditions de vol, et pour cette raison, on parle de tuyère à section variable.

Les volets suiveurs 2b, 4b sont intercalés entre les volets commandés et prennent appui de part et d'autre, au niveau de leurs bords latéraux, sur la face radialement interne des volets commandés 2a, 4a. Les volets suiveurs ne sont donc pas reliés à un mécanisme de commande, ils se contentent de suivre les volets commandés 2a, 4a.

La direction radiale est définie dans le présent mémoire comme étant la direction perpendiculaire à l'axe X de la tuyère, et la face interne d'un élément comme étant la face de l'élément en regard de l'axe X.

Lors du fonctionnement du turboréacteur, la tuyère 1 est traversée par un flux de gaz chauds en provenance de la chambre de post-combustion du turboréacteur. Le mécanisme de commande 5 des volets commandés 2a, 4a, en faisant varier l'ouverture de la tuyère, permet de faire croître ou décroître la vitesse d'échappement du flux gazeux à la sortie de la tuyère.

Les températures du flux de gaz chauds traversant la tuyère CV-DV sont généralement très élevées, si bien que plusieurs systèmes de refroidissement ont été développés pour limiter l'échauffement des faces radialement interne des volets de la tuyère.

Le brevet US 5,775,589 décrit une tuyère CV-DV pour turboréacteur militaire, comprenant des volets divergents suiveurs alimentés en air de refroidissement.

Cet air circule à l'intérieur des volets avant de s'échapper par des perforations pratiquées dans la paroi interne de ces derniers, on parle de multiperforations. Il se forme ainsi un film d'air protecteur à la surface de cette paroi, limitant l'échange de chaleur entre cette dernière et lesdits gaz chauds.

Dans un mode de réalisation particulier, les volets divergents commandés ne sont pas alimentés en air de refroidissement et ne présentent donc pas de multipertorations, seuls des moyens pour injecter de l'air au niveau du col (la plus petite section) de la tuyère sont prévus pour refroidir ces volets. Or, de tels moyens ne sont pas suffisants pour refroidir correctement les volets divergents commandés, en particulier dans les régions de ces volets éloignées dudit col.

L'invention se propose d'améliorer le refroidissement des volets commandés d'une tuyère CV-DV, en particulier lorsque les volets divergents commandés ne sont pas eux-mêmes alimentés en air de refroidissement.

Pour atteindre ce but, l'invention a pour objet une tuyère CV-DV de turboréacteur comprenant des volets divergents commandés, des volets divergents suiveurs intercalés entre les volets commandés, et des moyens pour alimenter en air de refroidissement les volets divergents suiveurs, ces derniers ayant une structure en caisson avec une paroi radialement interne, et une paroi radialement externe. Selon l'invention, lesdits volets divergents suiveurs présentent en outre, des ouvertures latérales destinées à délivrer de l'air de refroidissement en direction de la face interne desdits volets divergents commandés, pour refroidir ces derniers.

L'invention utilise ainsi une partie de l'air de refroidissement qui alimente les volets divergents suiveurs pour refroidir la face interne des volets divergents commandés. Ceci se révèle particulièrement utile lorsque les volets divergents commandés ne sont pas eux-mêmes alimentés en air de refroidissement.

Le fait de limiter l'échauffement des volets divergents commandés permet d'une part d'augmenter la durée de vie des pièces de ces volets, et d'autre part, dans le cadre d'opérations militaires, d'améliorer la discrétion infrarouge de la tuyère de l'avion.

Selon un mode particulier de réalisation de l'invention, les parois externe et interne de la tuyère sont emboîtées l'une dans l'autre au niveau de leurs extrémités latérales, tout en gardant la possibilité de coulisser entre elles.

Ainsi, lors du fonctionnement du turboréacteur, les contraintes mécaniques au sein du volet sont limitées, puisque lesdites parois peuvent coulisser entre elles. De telles contraintes mécaniques peuvent résulter par exemple des différences de dilatation entre les parois externe et interne, du fait que ces dernières sont soumises à des températures différentes.

En outre, pour optimiser les performances d'une tuyère CV-DV, il est souhaitable de minimiser les fuites de gaz chauds entre les volets divergents commandés et les volets divergents suiveurs. Pour cette raison, chaque volet suiveur doit présenter une souplesse en torsion, de sorte que ses bords latéraux restent au contact de la surface interne des deux volets commandés qui l'entourent, même lorsqu'il existe un léger décalage entre ces deux volets, ce qui devient fréquent avec l'usure des systèmes de commande de ces volets. Cette souplesse en torsion est améliorée grâce aux possibilités de coulissement des parois externe et interne entre elles:

De plus, de manière à favoriser les contacts entre les bords latéraux des volets divergents suiveurs et la surface interne des volets divergents commandés, les extrémités latérales des parois externe et interne sont courbes.

Selon un mode particulier de réalisation de l'invention, les parois externe et interne de la tuyère présentent chacune des trous le long de leurs extrémités latérales. Les trous de l'une des parois se situent en regard des trous de l'autre paroi lorsque ces parois sont emboîtées l'une dans l'autre, et forment ainsi lesdites ouvertures latérales.

Avantageusement les trous de l'une des parois ont une section supérieure à celle des trous de l'autre paroi, de sorte que le trou de plus petite section débouche toujours à l'intérieur du trou de plus grande section, quelle que soit la position des parois internes et externes entre elles. Ceci garantit la présence d'ouvertures latérales lorsque les parois internes et externes coulissent entre elles, suite à des phénomènes de dilatation ou de torsion du volet.

Selon un mode particulier de réalisation de l'invention, les parois interne et externe des volets divergents suiveurs présentent chacune au moins une encoche ménagée sur leur périphérie latérale, débouchant à l'intérieur de l'un desdits trous.

Une telle encoche permet de diminuer les contraintes mécaniques au sein du volet, liées à la dilatation des parois, ou à la torsion du volet. Par ailleurs, comme chaque encoche débouche à l'intérieur de l'un desdits trous, l'apparition de criques à l'extrémité de l'encoche est évitée.

Selon un mode particulier de réalisation de l'invention, chaque volet divergent suiveur comprend en outre une entretoise, située entre sa paroi interne et sa paroi externe, dans le plan de symétrie du volet. Cette entretoise renforce la structure du volet et lui permet de garder sa forme même lorsque les pressions exercées sur sa paroi interne par le flux de gaz chaud traversant la tuyère, sont élevées.

Avantageusement, la tuyère est caractérisée en ce que chaque volet divergent suiveur comprend en outre une glissière solidaire de la paroi externe dudit volet, et en ce que la section de ladite entretoise a la forme générale d'un I, la base de l'entretoise étant fixée à la paroi interne dudit volet, et sa partie supérieure étant apte à glisser dans ladite glissière.

Cette structure particulière autorise le mouvement de la paroi interne du volet par rapport à sa paroi externe. On réussit ainsi à renforcer la structure du volet tout en préservant la souplesse de cette dernière.

Selon un mode particulier de réalisation de l'invention, la paroi radialement interne des volets divergents suiveurs présente en outre des perforations susceptibles de laisser s'échapper l'air de refroidissement. Ceci permet de créer un film d'air protecteur à la surface du volet.

Selon un autre mode de réalisation de l'invention, lesdits volets divergents commandés ne sont pas alimentés en air de refroidissement, et ne sont donc refroidis que par le biais des ouvertures latérales présentes sur les volets suiveurs.

Ce mode de réalisation simplifie considérablement la structure de la tuyère CV-DV car il permet de réaliser des volets divergents commandés n'ayant pas de structure creuse, en caisson, nécessaire au passage de l'air de refroidissement. Au contraire, on peut réaliser des volets ayant une structure dite simple peau, c'est-à-dire à paroi unique. Il est alors facile de relier ce type de volet commandé aux organes de commande qui le dirigent.

L'invention et ses avantages seront mieux compris à la lecture de la description détaillée d'un mode préféré de réalisation, illustré par les figures suivantes :
- la figure 1 est une vue en perspective d'une tuyère CV-DV de l'art antérieur ;
- la figure 2 est une vue en coupe transversale d'un volet divergent suiveur d'une tuyère selon l'invention ;
- les figures 3a et 3b sont des vues de détails des ouvertures latérales du volet de la figure 2 ; et
- la figure 4 représente une partie des volets divergents d'une tuyère selon l'invention, vue de l'intérieur de la tuyère ;
- la figure 5 est une vue en perspective d'une tuyère CV-DV selon l'invention ; et
- la figure 6 représente schématiquement, en demi-coupe axiale, une tuyère CV-DV selon l'invention.

La structure générale de la tuyère selon l'invention est semblable à celle de la tuyère représentée figure 1, et précédemment décrite.

La tuyère 1 comprend des volets convergents 2 et des volets divergents 4. Parmi les volets divergents 4, on distingue les volets divergents commandés 4a et les volets divergents suiveurs 4b. Chaque volet divergent suiveur 4b prend appui sur les deux volets divergents commandés adjacents dans une zone située au niveau de ses bords latéraux.

Les volets divergents commandés 4a sont articulés à leur extrémité amont sur les extrémités aval des volets convergents commandés 2a, et les volets divergents suiveurs 4b sont également articulés à leur extrémité amont sur les extrémités aval des volets convergents suiveurs 2b.

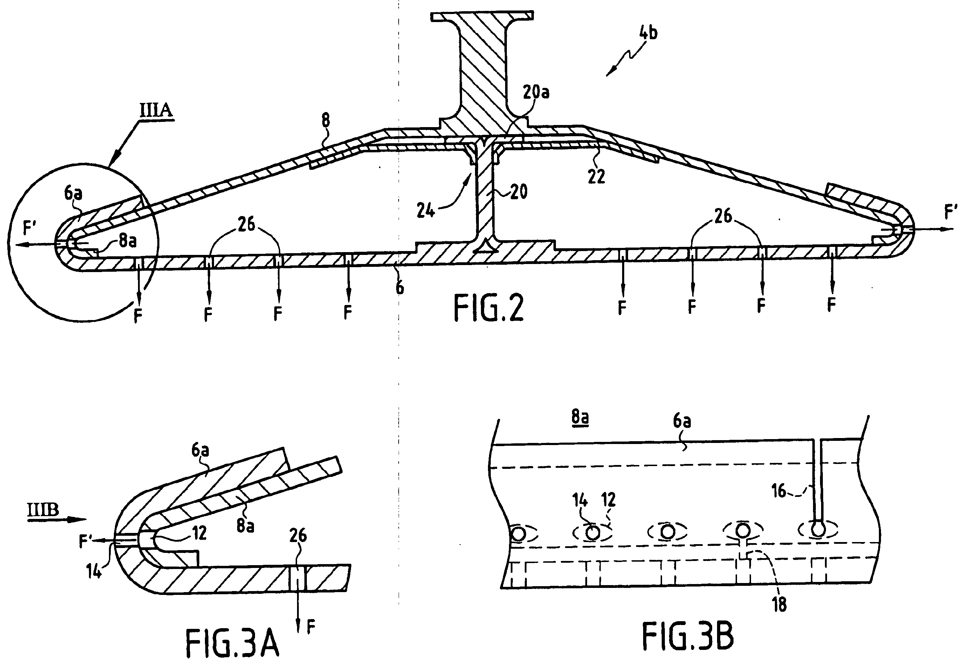

Chaque volet divergent suiveur 4b, présente une structure en caisson, et une section transversale sensiblement trapézoïdale, représentée figure 2, avec une paroi radialement interne 6, et une paroi radialement externe 8.

Les extrémités latérales 8a de la paroi externe 8 et les extrémités latérales 6a de la paroi interne 6 sont recourbées et les courbures des extrémités latérales 6a et 8a sont telles que les parois interne et externe 6 et 8 puissent être emboîtées l'une dans l'autre, les extrémités de la paroi interne 6a recouvrant celles de la paroi externe 8.

Par ailleurs, les extrémités latérales 6a de la paroi interne 6 forment glissière pour les extrémités latérales 8a de la paroi externe 8, de sorte que ces parois peuvent coulisser entre elles dans la direction axiale.

Les bords latéraux du volet 4b sont donc formés par le recouvrement des extrémités latérales des parois interne 6 et externe 8.

Le volet suiveur 4b est également muni de plusieurs entretoises 20 réparties régulièrement le long du volet et situées entre la paroi interne 6 et la paroi externe 8, dans le plan de symétrie du volet.

L'entretoise 20 est constituée d'une âme rectiligne assemblée à une base et une partie supérieure perpendiculaires à l'âme, la section de l'entretoise ayant la forme générale d'un I. La base de l'entretoise est fixée, par soudure, brasage, ou tout autre moyen de fixation approprié, sur la paroi interne 6 du volet. La partie supérieure de l'entretoise 20 est composée de deux branches 20a qui s'écartent de chaque côté de l'âme de l'entretoise 20, perpendiculairement à la direction de cette âme.

Sur la paroi externe 8 du volet est fixée une glissière axiale 22 dans laquelle est pratiquée une fente 24 s'étendant suivant le plan de symétrie du volet. La largeur de la fente 24 est supérieure à l'épaisseur de l'âme de l'entretoise 20, et l'entretoise 20 peut donc glisser dans la glissière 22 suivant la direction de la fente. Les branches 20a de l'entretoise 20 s'étendent entre la glissière 22 et la paroi externe 8, et sont aptes à venir en butée contre l'une ou l'autre de ces parties pour limiter le rapprochement ou l'écartement des parois interne 6 et externe 8, par quoi la tenue en forme du volet est améliorée.

Comme représenté figures 3a et 3b, les parois interne et externe 6, 8 présentent chacune le long de leurs extrémités latérales 6a, 8a des trous 12, 14, disposés à intervalles réguliers.

Lorsque les parois 6, 8 sont emboîtées l'une dans l'autre, les trous 14 de la paroi externe 8 se situent en regard des trous 12 de la paroi interne 6, et forment ainsi des ouvertures latérales dans la structure du volet suiveur 4b.

Les trous 12 de la paroi externe 8 sont de forme oblongue et ont une section supérieure à celle des trous circulaires 14 de la paroi interne 6. La taille et la forme des trous oblongs 12 sont déterminées pour que les trous circulaires 14 ne soient jamais masqués, même lorsque les parois externe 8 et interne 6 se dilatent de manière différente et/ou lorsque le volet suiveur 4b subit une torsion provoquant un déplacement des deux parois 6 et 8, l'une par rapport à l'autre.

Par ailleurs, les parois interne et externe 6, 8 sont respectivement munies d'encoches 16 et 18 situées à intervalles réguliers le long de leurs extrémités latérales 6a et 8a. Ces encoches 16 et 18 commencent sur le bord des extrémités latérales 6a, 8a, s'étendent perpendiculairement à ce bord et débouchent au niveau des trous 12 et 14 pratiqués dans chacune des parois 6 et 8.

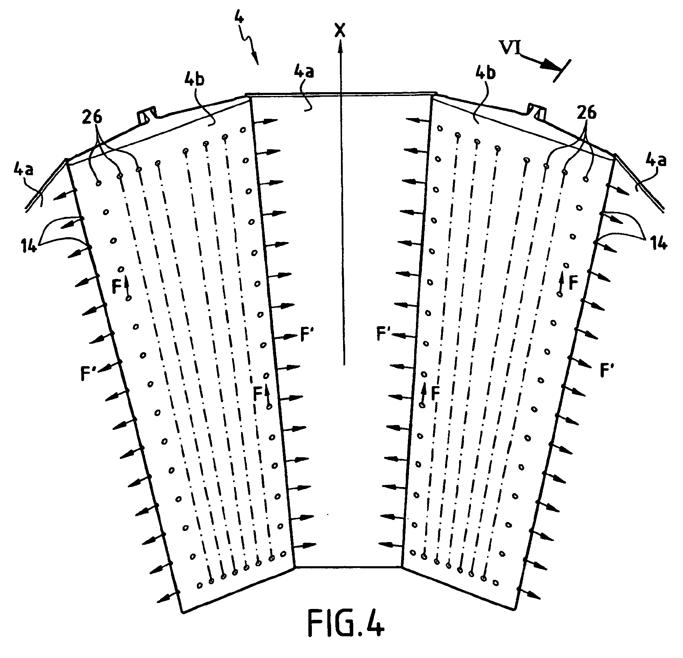

Comme représenté figures 2 et 4, la paroi interne 6 des volets suiveurs 4b présente de nombreuses perforations 26 dans sa partie centrale. On parle de multiperforations.

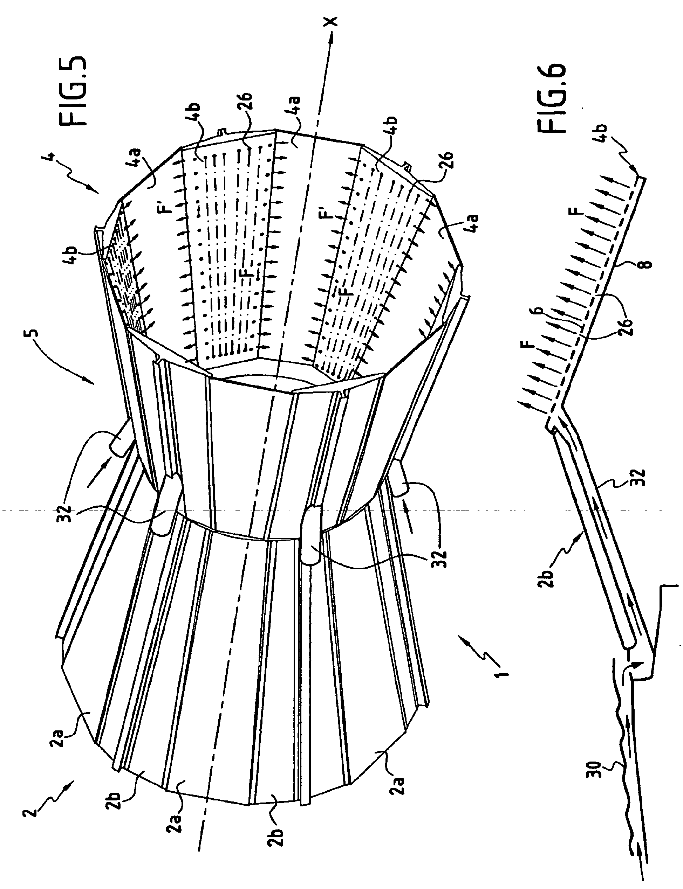

En référence aux figures 4, 5 et 6, lorsque les volets commandés 4a ne sont pas alimentés en air de refroidissement, et que seuls les volets suiveurs le sont, le refroidissement des volets divergents de la tuyère précédemment décrite se déroule comme suit.

L'air de refroidissement des volets divergents suiveurs 4b provient d'un collecteur, non représenté, placé en amont de la tuyère, par rapport au sens d'écoulement des gaz chauds la traversant. L'air prélevé est acheminé jusqu'aux volets divergents suiveurs 4b, comme représenté schématiquement figure 6, en passant sous une chemise de protection thermique 30 du turboréacteur située en amont de la tuyère, et par un système de canalisations 32. Ensuite, l'air circule à l'intérieur de la structure en caisson des volets divergents 4b, et sort par les perforations 26 et les ouvertures latérales 12, 14 desdits volets 4b.

L'air froid sortant par les perforations 26, suivant les flèches F, permet de limiter l'échauffement de la paroi interne 6 des volets divergents suiveurs 4b en créant un film d'air frais sur la face interne de cette paroi.

L'air froid sortant par les ouvertures latérales 12, 14 suivant les flèches F' est quant à lui dirigé circonférentiellement vers la face interne des volets divergents commandés 4a et permet d'abord de refroidir cette dernière par impact. Ensuite, cet air froid crée un film protecteur sur la face interne des volets divergents commandés 4a, ce qui permet d'atténuer les échanges de chaleur entre les gaz chauds traversant la tuyère et ces volets 4a, par quoi on limite leur échauffement.

## Revendications

1. Tuyère convergente-divergente de turboréacteur comprenant des volets divergents commandés (4a), des volets divergents suiveurs (4b) intercalés entre les volets commandés, et des moyens (32) pour alimenter en air de refroidissement les volets divergents suiveurs (4b), lesdits volets divergents suiveurs (4b) ayant une structure en caisson avec une paroi radialement interne (6), et une paroi radialement externe (8), **caractérisée en ce que** lesdits volets divergents suiveurs présentent des ouvertures latérales destinées à délivrer de l'air de refroidissement en direction de la face interne desdits volets divergents commandés (4a), pour refroidir ces derniers.

2. Tuyère selon la revendication 1, **caractérisée en ce que** les parois externe (8) et interne (6) sont emboîtées l'une dans l'autre au niveau de leurs extrémités latérales, tout en gardant la possibilité de coulisser entre elles.

3. Tuyère selon la revendication 2, **caractérisée en ce que** lesdites extrémités latérales des parois externe (8) et interne (6) sont courbes.

4. Tuyère selon l'une quelconque des revendications 1 à 3, **caractérisée en ce que** les parois externe (8) et interne (6) présentent chacune des trous (12, 14) le long de leurs extrémités latérales, et **en ce que** les trous (12) de l'une des parois (8) se situent en regard des trous (14) de l'autre paroi (6) lorsque ces parois sont emboîtées l'une dans l'autre, par quoi lesdites ouvertures latérales sont formées.

5. Tuyère selon la revendication 4, **caractérisée en ce que** les trous (12) de l'une des parois (8) ont une section supérieure à celle des trous (14) de l'autre paroi (6).

6. Tuyère selon la revendication 4 ou 5, **caractérisée en ce que** les trous (12) de l'une des parois (8) sont de forme oblongue, tandis que les trous (14) de l'autre paroi (6) sont de forme circulaire.

7. Tuyère selon l'une quelconque des revendications 4 à 6, **caractérisée en ce que** les parois externe (8) et interne (6) présentent chacune au moins une encoche (16, 18) ménagée sur leur périphérie latérale, débouchant à l'intérieur de l'un desdits trous (12, 14).

8. Tuyère selon l'une quelconque des revendications précédentes, **caractérisée en ce que** chaque volet divergent suiveur (4b) comprend en outre, une entretoise (20), située entre sa paroi interne (6) et sa paroi externe (8), dans le plan de symétrie dudit volet.

9. Tuyère selon la revendication 8, **caractérisée en ce que** chaque volet divergent suiveur (4b) comprend en outre une glissière (22) fixée à la paroi externe (8) dudit volet, et **en ce que** ladite entretoise (20) a la forme générale d'un I, sa base étant fixée à la paroi interne (6) dudit volet, et sa partie supérieure étant apte à glisser dans ladite glissière (22).

10. Tuyère selon l'une quelconque des revendications précédentes, **caractérisée en ce que** la paroi radialement interne (6) des volets divergents suiveurs (4b) présente en outre des perforations (26) susceptibles de laisser s'échapper l'air de refroidissement.

11. Tuyère selon l'une quelconque des revendications précédentes, **caractérisée en ce que** lesdits volets divergents commandés (4a) ne sont pas alimentés en air de refroidissement.

## Patentansprüche

1. Konvergent-divergente Düse eines Turbostrahltriebwerks, mit gesteuerten divergenten Klappen (4a), divergenten Folgeklappen (4b), die zwischen den gesteuerten Klappen angeordnet sind, und mit Mitteln (32), um die divergenten Folgeklappen (4b) mit Kühlluft zu beaufschlagen, wobei die divergenten Folgeklappen (4b) eine kastenförmige Struktur mit einer radial inneren Wand (6) und einer radial äußeren Wand (8) aufweisen, **dadurch gekennzeichnet, daß** die divergenten Folgeklappen Seitenöffnungen aufweisen, die dazu bestimmt sind, Kühlluft zur Innenseite der gesteuerten divergenten Klappen (4a) zu liefern, um letztere zu kühlen.

2. Düse nach Anspruch 1, **dadurch gekennzeichnet, daß** die Außenwand (8) und die Innenwand (6) im Bereich ihrer Seitenenden ineinander gesteckt sind, wobei weiterhin die Möglichkeit besteht, daß sie sich untereinander verschieben lassen.

3. Düse nach Anspruch 2, **dadurch gekennzeichnet, daß** die genannten Seitenenden der Außenwand (8) und der Innenwand (6) gebogen sind.

4. Düse nach irgendeinem der Ansprüche 1 bis 3, **dadurch gekennzeichnet, daß** die Außenwand (8) und die Innenwand (6) jeweils Löcher (12, 14) entlang ihrer Seitenenden aufweisen, und daß die Löcher (12) von einer (8) der Wände den Löchern (14) der anderen Wand (6) gegenüberliegen, wenn diese Wände ineinander gesteckt sind, wodurch die genannten Seitenöffnungen gebildet werden.

5. Düse nach Anspruch 4, **dadurch gekennzeichnet, daß** die Löcher (12) von einer (8) der Wände einen Querschnitt aufweisen, der größer ist als derjenige der Löcher (14) der anderen Wand (6).

6. Düse nach Anspruch 4 oder 5, **dadurch gekennzeichnet, daß** die Löcher (12) von einer (8) der Wände eine längliche Form aufweisen, während die Löcher (14) der anderen Wand (6) kreisförmig ausgebildet sind.

7. Düse nach irgendeinem der Ansprüche 4 bis 6, **dadurch gekennzeichnet, daß** die Außenwand (8) und die Innenwand (6) jeweils wenigstens einen an ihrem seitlichen Umfang ausgebildeten Einschnitt (16, 18) aufweisen, der in eines der Löcher (12, 14) mündet.

8. Düse nach irgendeinem der vorhergehenden Ansprüche, **dadurch gekennzeichnet, daß** jede divergente Folgeklappe (4b) außerdem einen Steg (20) aufweist, der zwischen ihrer Innenwand (6) und ihrer Außenwand (8) in der Symmetrieebene der Klappe gelegen ist.

9. Düse nach Anspruch 8, **dadurch gekennzeichnet, daß** jede divergente Folgeklappe (4b) ferner eine Gleitschiene (22) umfaßt, die an der Außenwand (8) der Klappe befestigt ist, und daß der Steg (20) allgemein die Form eines I aufweist, wobei dessen Basis an der Innenwand (6) der Klappe befestigt ist und wobei dessen oberer Teil geeignet ist, in der Gleitschiene (22) zu gleiten.

10. Düse nach irgendeinem der vorhergehenden Ansprüche, **dadurch gekennzeichnet, daß** die radial innere Wand (6) der divergenten Folgeklappen (4b) ferner Perforierungen (26) aufweist, die geeignet sind, die Kühlluft entweichen zu lassen.

11. Düse nach irgendeinem der vorhergehenden Ansprüche, **dadurch gekennzeichnet, daß** die gesteuerten divergenten Klappen (4a) nicht mit Kühlluft beaufschlagt werden.

## Claims

1. Convergent-divergent turbojet nozzle comprising driven divergent flaps (4a), follower divergent flaps (4b) interposed between the driven flaps, and means (32) for supplying cooling air to the follower divergent flaps (4b), said follower divergent flaps (4b) having a box structure with a radially inner wall (6) and a radially outer wall (8), said nozzle being **characterised in that** said follower divergent flaps have lateral openings for delivering cooling air towards the inner face of said driven divergent flaps (4a), to cool the latter.

2. Nozzle according to Claim 1, **characterised in that** the outer and inner walls (8, 6) are fitted one inside the other along their lateral extremities but retain the freedom to slide over each other.

3. Nozzle according to Claim 2, **characterised in that** said lateral extremities of the outer and inner walls (8, 6) are curved.

4. Nozzle according to any one of claims 1 to 3, **characterised in that** the outer and inner walls (8, 6) each have holes (12, 14) along their lateral extremities, and **in that** the holes (12) of one of the walls (8) are aligned with the holes (14) of the other wall (6) when these walls are fitted one inside the other, therefore forming said lateral openings.

5. Nozzle according to Claim 4, **characterised in that** the holes (12) of one of the walls (8) have a larger cross section than the holes (14) of the other wall (6).

6. Nozzle according to Claim 4 or 5, **characterised in that** the holes (12) of one of the walls (8) are oblong, while the holes (14) of the other wall (6) are circular.

7. Nozzle according to any one of claims 4 to 6, **characterised in that** the outer and inner walls (8, 6) each have at least one incision (16, 18) leading from their lateral periphery to one of said holes (12, 14).

8. Nozzle according to any one of the preceding claims, **characterised in that** each follower divergent flap (4b) also comprises a spacer (20), situated between its inner wall (6) and its outer wall (8), in the plane of symmetry of said flap.

9. Nozzle according to Claim 8, **characterised in that** each follower divergent flap (4b) also comprises a guide rail (22) fixed to the outer wall (8) of said flap, and **in that** said spacer (20) is in the general shape of an I, its base being fixed to the inner wall (6) of said flap, and its upper part being able to slide in said guide rail (22).

10. Nozzle according to any one of the preceding claims, **characterised in that** said radially inner wall (6) of the follower divergent flaps (4b) also has perforations (26) through which the cooling air can escape.

11. Nozzle according to any one of the preceding claims, **characterised in that** said driven divergent flaps (4a) are not supplied with cooling air.
